# EUROPÄISCHE PATENTANMELDUNG

(11) **EP 1 701 068 A2**
(43) Veröffentlichungstag der Anmeldung: **13.09.2006**
(21) Anmeldenummer: 06002786.9
(22) Anmeldetag: 11.02.2006
(51) Int. Cl.: F16H 63/30

(54) **Schaltvorrichtung für ein Getriebe eines Kraftfahrrzeugs**

(30) Priorität: 11.03.2005 DE 102005011274
(71) Anmelder: ZF FRIEDRICHSHAFEN AG, 88038 Friedrichshafen (DE)
(72) Erfinder: Fischer, Dieter, 88149 Nonnenhorn (DE); Späth, Klaus, 88276 Berg (DE)

(57) **Zusammenfassung**

Es wird eine Schaltvorrichtung für ein Getriebe eines Kraftfahrzeugs vorgeschlagen, umfassend eine Schaltwelle (2), die über Schaltfinger (1) in Schaltgassen zugeordneten Schaltschienen (4) des Getriebes eingreift, wobei auf der Schaltwelle (2) für jede Schaltschiene (4) bzw. Schaltgasse ein Schaltfinger (1) vorgesehen ist, wobei die Schaltfinger (1) derart dimensioniert sind, dass die Unterschiede zwischen der zum Schalten der Gänge jeweils erforderlichen auszuübenden Schaltkraft reduziert bzw. minimiert werden, so dass die unterschiedlichen Schaltkräfte der Synchronisierungen der einzelnen Schaltgassen über die unterschiedliche Übersetzung der über die Schaltwelle (2) übertragenen Kraft weitgehend ausgeglichen werden.

## Beschreibung

Die vorliegende Erfindung betrifft eine Schaltvorrichtung für ein Getriebe eines Kraftfahrzeugs gemäß dem Oberbegriff des Patentanspruchs 1.

Nach dem Stand der Technik dient bei derartigen Schaltvorrichtungen die Drehbewegung der Schaltstange zur Vorwahl der einzelnen Schaltgassen und erfordert in der Regel keine hohen Wählkräfte im Gegensatz zu der zum Einlegen des gewünschten Ganges dienenden Längsbewegung der Schaltstange, welche insbesondere bei Getrieben für schwere Fahrzeuge große Schaltkräfte erfordert.

Aus der DE 198 40 052 A1 der Anmelderin ist eine Schaltvorrichtung für ein Wechselgetriebe eines Kraftfahrzeugs bekannt, welche eine Servounterstützungseinrichtung umfasst. Hierbei ist ein Schaltgestänge mit einem auslösenden Hebel verbunden, der mit einer Steuerstange der Servounterstützungseinrichtung verbunden ist; femer ist eine Schaltwelle vorgesehen, die über Hebel in Schaltschienen des Getriebes eingreift. Die Schaltvorrichtung ist fest am Getriebegehäuse angeordnet und weist eine zentrale Schaltwelle auf, die vom Schaltgestänge drehbar betätigbar ist, um die Handschaltkraft auf den auslösenden Hebel der Servounterstützungseinrichtung und auf die Schaltschienen des Getriebes zu übertragen.

Die von der Servounterstützungseinrichtung gelieferte Schaltkraft ist auf eine axial fest in der Schaltvorrichtung angeordnete Hohlwelle übertragbar, welche die zentrale Schaltwelle umgibt und mit der zentralen Schaltwelle zum Schalten der Schaltschienen verdrehbar ist. Die Wählbewegung erfolgt durch die axiale Verschiebung der zentralen Schaltwelle innerhalb der Hohlwelle; die Schaltbewegung ergibt sich aus der Drehbewegung der zentralen Schaltwelle, welche ein Verschwenken des auslösenden Hebels bzw. Schaltfingers bewirkt.

Im Rahmen der DE 198 40 052 A1 wird vorgeschlagen, dass in der zentralen Schaltwelle axial ausgerichtete Nuten bzw. Längsnuten vorgesehen sind, in die Stifte zur Bildung einer verdrehfesten aber axial beweglichen Verbindung der zentralen Schaltwelle mit dem auslösenden Hebel der Servounterstützungseinrichtung eingreifen.

Bei Getrieben sind die Schaltkräfte zum Einlegen der einzelnen Gänge üblicherweise sehr unterschiedlich. Dies führt dazu, dass der Schaltkomfort bei Rückschaltungen, z.B. vom zweiten Gang in den ersten Gang, aufgrund hoher Schaltkräfte stark beeinträchtigt wird, während der Schaltkomfort beispielsweise für eine Rückschaltung vom vierten in den dritten Gang aufgrund niedriger erforderlicher Schaltkräfte den Anforderungen genügt. Hierbei würde eine Verbesserung des Schaltkomforts für eine Rückschaltung vom zweiten Gang in den ersten Gang auch in einer Reduzierung der Schaltkräfte für die Rückschaltung vom vierten in den dritten Gang resultieren und keine Harmonisierung der Schaltkräfte bewirken. Ein weiteres Problem besteht darin, dass sich die großen Schaltkraftunterschiede, bezogen auf die Synchronlebensdauer, sehr negativ auswirken; die Synchronisierung zwischen dem dritten und dem vierten Gang wird dadurch erheblich überlastet.

Aus der DE 198 39 854 A1 der Anmelderin ist eine weitere Schaltvorrichtung für ein Kraftfahrzeug-Wechselgetriebe bekannt, bei der eine Servounterstützungseinrichtung die Schaltkraft des Fahrers unterstützt. Hierbei wird die Zufuhr der unterstützenden Druckluft, vorzugsweise über ein Druckbegrenzungsventil reduziert und beispielsweise nur dann zugelassen, wenn die Fahrzeugkupplung betätigt wird. Zudem wird im Rahmen der DE 198 39 854 A1 vorgeschlagen, dass die Ansteuerung des Druckbegrenzungsventils in Abhängigkeit von der gewählten Schaltgasse erfolgt, wodurch die erforderlichen Schaltkräfte harmonisiert werden sollen. Um diese Konstruktion in der Praxis zu implementieren, sind in nachteiliger Weise zusätzliche Ventile erforderlich, welche eine Reduzierung der Druckluft ermöglichen.

Der vorliegenden Erfindung liegt die Aufgabe zugrunde, eine Schaltvorrichtung für ein Getriebe eines Kraftfahrzeugs anzugeben, bei der die Schaltkräfte zum Einlegen der einzelnen Gänge im Wesentlichen das gleiche Kraftniveau aufweisen. Dadurch soll neben dem Schaltkomfort auch die Lebensdauer der Synchronisierungen erhöht werden.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Schaltvorrichtung für ein Getriebe eines Kraftfahrzeugs vorgeschlagen, umfassend eine Schaltwelle, die über Schaltfinger in Schaltgassen zugeordneten Schaltschienen des Getriebes eingreift, bei der auf der Schaltwelle für jede Schaltgasse ein Schaltfinger vorgesehen ist, wobei die Schaltfinger derart dimensioniert sind, dass die Unterschiede zwischen der zum Schalten der Gänge jeweils erforderlichen auszuübenden Schaltkraft reduziert bzw. minimiert werden, so dass die unterschiedlichen Schaltkräfte der Synchronisierungen der einzelnen Schaltgassen über die unterschiedliche Übersetzung der über die Schaltwelle übertragenen Kraft weitgehend ausgeglichen werden.

Die Schaltwelle kann auch durch eine Hohlwelle mit Schaltfingern gemäß der DE 198 40 052 A1, deren Gegenstand vollinhaltlich in dieser Beschreibung aufgenommen sein soll, gebildet sein.

Insbesondere ist gemäß der Erfindung der einer Schaltgasse, die hohe Schaltkräfte erfordert, zugeordnete Schaltfinger kürzer ausgeführt als ein Schaltfinger für eine Schaltgasse, die niedrige Schaltkräfte erfordert, so dass durch die kürzere Übersetzung bis zur Synchronisierung, eine geringere über die Schaltwelle übertragene Schaltkraft erforderlich ist, wobei durch eine entsprechende Dimensionierung bzw. Verlängerung des einer Schaltgasse, die niedrige Schaltkräfte erfordert, zugeordneten Schaltfingers, die für diese Schaltgasse erforderliche über die Schaltwelle übertragene Schaltkraft erhöht wird. Auf diese Weise wird erreicht, dass für alle Schaltgassen die gleiche Schaltkraft zum Schalten der Gänge benötigt wird.

Beispielsweise kann bei einem Gruppengetriebe mit einem 4-Gang-Grundgetriebe, welches zwei Schaltgassen aufweist, nämlich die Gasse ½ und die Gasse ¾ , der Schaltfinger für die Gasse ¾ länger als der Schaltfinger der Gasse ½ ausgeführt sein, um die eingeleitete Schaltkraft an die geringe Kräfte fordernde Synchronisierung ¾ anzupassen. Dadurch verändert sich die Übersetzung bis zur Synchronisierung, d.h. die Kraft an der Synchronisierung ¾ wird kleiner, was in vorteilhafter Weise in einer geringeren Synchronbelastung resultiert. Des weiteren wird dadurch der Effekt erzielt, dass, wie bereits erläutert, die Schaltkräfte harmonisiert werden, da die erforderliche über die Schaltwelle übertragene Schaltkraft erhöht wird.

Bei der beschriebenen Konstruktion ist aufgrund der unterschiedlich tangen Schaltfinger für die einzelnen Gassen der Handschaltweg zwischen den Gängen ½ und ¾ in erheblichem Maße unterschiedlich groß, was u.a. aus ergonomischen Gründen nachteilig ist. Erfindungsgemäß wird dies vermieden, indem der Eingriff des langen Schaltfingers, d.h. bei einem 4-Gang-Grundgetriebe des der Gasse ¾ zugeordneten Schaltfingers, in das Mitnehmermaul der Schaltschiene mit einem entsprechend großem Spiel versehen ist.

Dieses große Spiel hat zur Folge, dass die Schaltschiene in der Getriebeneutralstellung nicht mehr spielfrei rastiert werden kann, so dass erfindungsgemäß vorgeschlagen wird, auf der Schaltschiene eine Neutralrastierung vorzusehen und/oder die Geometrie des Schaltfingers so zu gestalten, dass das genannte Spiel am Mitnehmermaul in Neutralstellung so gering wie möglich ausfällt.

Durch diese Konzeption kann die Schaltanlage und damit der Handschalthebel im Fahrerhaus nicht mehr spielfrei rastiert werden. Wenn das Getriebe eine Servounterstützungseinrichtung aufweist, kann die Schaltanlage über die Rastierung der Servounterstützungseinrichtung rastiert werden. Für Getriebe ohne Servounterstützungseinrichtung wird vorgeschlagen, dass die Rastierung über eine im Schaltausleger vorgesehene Raste erfolgt.

Im Rahmen einer besonders vorteilhaften Ausführungsform der Erfindung wird vorgeschlagen, für den Fall, dass auf der Schaltschiene eine Neutralrastierung vorgesehen ist, diese zusätzlich zur Harmonisierung der Schaltkräfte verwendet wird. Dies wird dadurch ermöglicht, dass die installierte Rastenkraft während der Synchronphase über eine Schräge der Schaltkraft entgegenwirkt. Hierbei ist diese Gegenkraft gangabhängig veränderbar, indem die Schrägen auf der Schaltschiene für die Gänge unterschiedlich steil ausgeführt sind.

Die Erfindung wird im Folgenden anhand der beigefügten Figuren beispielhaft näher erläutert.

Es stellen dar:
- Fig. 1: eine schematische Schnittansicht einer zum Schalten verdrehbaren Schaltwelle mit einem gemäß der Erfindung ausgebildeten, einer Schaltgasse, die hohe Schaltkräfte erfordert, zugeordneten Schaltfinger;
- Fig. 2: eine schematische Schnittansicht einer zum Schalten verdrehbaren Schaltwelle mit einem gemäß der Erfindung ausgebildeten, einer Schaltgasse, die niedrige Schaltkräfte erfordert, zugeordneten Schaltfinger und
- Fig. 3: eine schematische Ansicht einer Schaltschiene mit einer Neutralrastierung, die gemäß der Erfindung derart ausgebildet ist, dass sie zusätzlich zur Harmonisierung der Schaltkräfte verwendet wird.

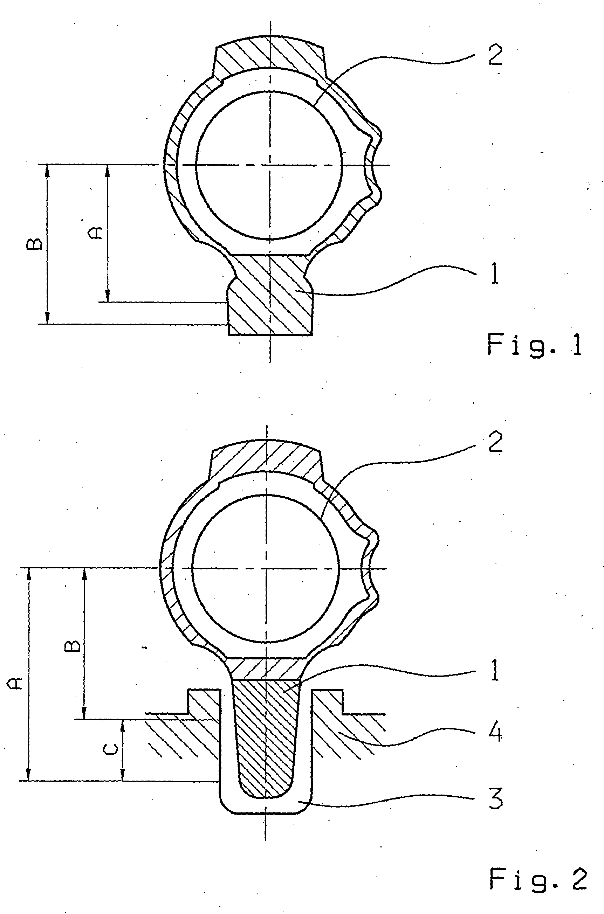

In Fig. 1 ist ein gemäß der Erfindung für eine Schaltschiene einer Schaltgasse, die hohe Schaltkräfte erfordert, ausgebildeter Schaltfinger 1 der Schaltwelle 2 einer Schaltvorrichtung dargestellt. Der mit 3 bezeichnete Bereich entspricht der zusätzlichen Länge, die ein Schaltfinger nach dem Stand der Technik zum Eingreifen in die entsprechende Schaltschiene hat; in der Fig. 1 entspricht die mit A bezeichnete Länge dem Radius des Schaltfingers gemäß der Erfindung und die mit B bezeichnete Länge dem Radius nach dem Stand der Technik. Durch die Verkürzung des Schaltfingers wird die zum Schalten erforderliche Schaltkraft reduziert.

Gemäß Fig. 2 ist erfindungsgemäß der Radius des einer Schaltgasse, die niedrige Schaltkräfte erfordert, zugeordneten Schaltfingers um den Betrag C vergrößert; analog Figur 1 entspricht die mit A bezeichnete Länge dem Radius des Schaltfingers gemäß der Erfindung und die mit B bezeichnete Länge dem Radius nach dem Stand der Technik. Dadurch wird die zum Schalten erforderliche Schaltkraft erhöht. Wie aus der Fig. 2 ersichtlich, verjüngt sich der in die Schaltschiene eingreifende Teil des Schaltfingers, um zu gewährleisten, dass lediglich dessen der Schaltwelle abgewandtes Ende beim Schalten gegen die Schaltschiene drückt.

Durch das dadurch entstehende Spiel zwischen Schaltfinger 1 und Mitnehmermaul 3 der Schaltschiene 4 wird vermieden, dass der Handschaltweg zwischen den Gängen ½ und ¾ unterschiedlich groß ist. Es ist erfindungsgemäß auch möglich, das Spiel durch eine entsprechende Ausgestaltung des Schaltfingers weiter zu vergrößern, um Unterschiede beim Handschaltweg auszugleichen. Beim vorliegenden Beispiel beträgt das Spiel bzw. der Freiweg bis zum Beginn der Kraftübertragung ca. 5 mm.

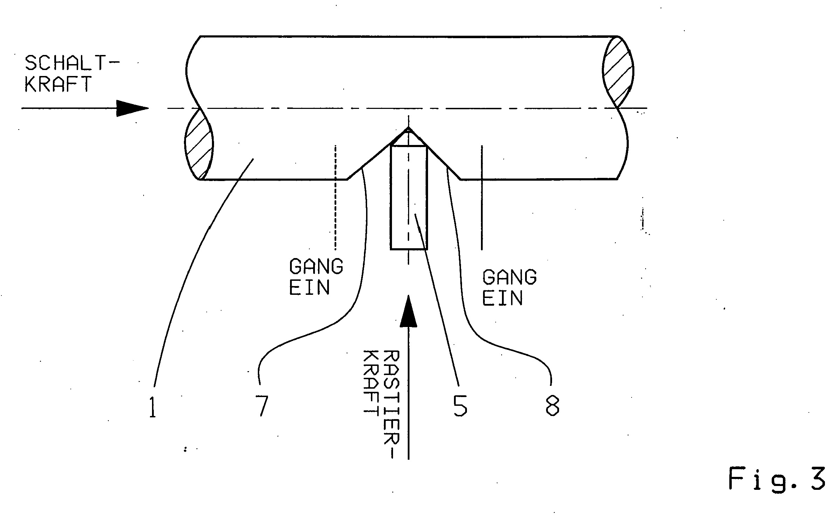

Durch das große Spiel zwischen Schaltfinger 1 und Mitnehmermaul 3 der Schaltschiene 4 kann die Schaltschiene 4 in der Getriebeneutralstellung nicht mehr spielfrei rastiert werden, so dass erfindungsgemäß auf der Schaltschiene 4 eine Neutralrastierung vorgesehen ist, welche auch zur Harmonisierung der Schaltkräfte bzw. zur Erhöhung der erforderlichen über die Schaltwelle 2 übertragenen Schaltkraft verwendet wird. Die erfindungsgemäße Rastierung ist Gegenstand der Fig. 3.

In Fig. 3 ist eine Schaltschiene 4 einer Schaltgasse, die niedrige Schaltkräfte erfordert, in Getriebeneutralstellung dargestellt. Zur Rastierung ist ein Rastierbolzen 5 vorgesehen, welcher, beispielsweise aufgrund der Kraft einer Feder, in eine Kerbe 6 in der Schaltschiene 4 eingreift. Gemäß der Erfindung wirkt die Rastenkraft während der Synchronphase über eine Schräge 7 bzw. 8 der Schaltkraft entgegen, so dass die erforderliche Schaltkraft weiter erhöht werden kann. Durch eine unterschiedliche Ausführung der Schrägen 7, 8 kann diese Gegenkraft in vorteilhafter Weise gangabhängig eingestellt werden.

Durch die erfindungsgemäße Konzeption wird auf einfache Weise eine Harmonisierung der Schaltkräfte erzielt und gleichzeitig ein Verschleiß der benötigten Synchronisierungen vermieden.

Selbstverständlich fällt auch jede konstruktive Ausbildung, insbesondere jede räumliche Anordnung der Bauteile der Schaltvorrichtung an sich sowie zueinander und soweit technisch sinnvoll, unter den Schutzumfang der vorliegenden Ansprüche, ohne die Funktion der Schaltvorrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: Schaltfinger
- 2: Schaltwelle
- 3: Mitnehmermaul
- 4: Schaltschiene
- 5: Rastiertiolzen
- 6: Kerbe
- 7: Schräge
- 8: Schräge

## Patentansprüche

1. Schaltvorrichtung für ein Getriebe eines Kraftfahrzeugs, umfassend eine Schaltwelle, die über Schaltfinger in Schaltgassen zugeordneten Schaltschienen des Getriebes eingreift, **dadurch gekennzeichnet , dass** auf der Schaltwelle (2) für jede Schaltschiene (4) bzw. Schaltgasse ein Schaltfinger (1) vorgesehen ist, wobei die Schaltfinger (1) derart dimensioniert sind, dass die Unterschiede zwischen der zum Schalten der Gänge jeweils erforderlichen auszuübenden Schaltkraft reduziert bzw. minimiert werden, so dass die unterschiedlichen Schaltkräfte der Synchronisierungen der einzelnen Schaltgassen über die unterschiedliche Übersetzung der über die Schaltwelle (2) übertragenen Kraft weitgehend ausgeglichen werden.

2. Schaltvorrichtung für ein Getriebe eines Kraftfahrzeugs nach Anspruch 1, **dadurch gekennzeichnet , dass** der einer Schaltgasse, die hohe Schaltkräfte erfordert, zugeordnete Schaltfinger (1) kürzer ausgeführt ist, als ein Schaltfinger (1) für eine Schaltgasse, die niedrige Schaltkräfte erfordert, so dass durch die kürzere Übersetzung bis zur Synchronisierung eine geringere über die Schaltwelle (2) übertragene Schaltkraft erforderlich ist, wobei durch eine entsprechende Dimensionierung bzw. Verlängerung des einer Schaltgasse, die niedrige Schaltkräfte erfordert, zugeordneten Schaltfingers (1), die für diese Schaltgasse erforderliche über-die Schaltwelle (2) übertragene Schaltkraft erhöht wird.

3. Schaltvorrichtung für ein Getriebe eines Kraftfahrzeugs nach Anspruch 1 oder 2, **dadurch gekennzeichnet , dass** bei einer Schaltgasse, die niedrige Schaltkräfte erfordert, zwischen Schaltfinger (1) und Mitnehmermaul (3) der Schaltschiene (4) ein großes Spiel vorgesehen ist.

4. Schaltvorrichtung für ein Getriebe eines Kraftfahrzeugs nach Anspruch 2 oder 3, **dadurch gekennzeichnet , dass** bei einer Schaltgasse, die niedrige Schaltkräfte erfordert, auf der Schaltschiene (4) eine Neutralrastierung vorgesehen ist.

5. Schaltvorrichtung für ein Getriebe eines Kraftfahrzeugs nach Anspruch 4, **dadurch gekennzeichnet, dass** die Neutralrastierung zur Erhöhung der erforderlichen über die Schaltwelle (2) übertragenen Schaltkraft verwendbar ist.

6. Schaltvorrichtung für ein Getriebe eines Kraftfahrzeugs nach Anspruch 4 oder 5, **dadurch gekennzeichnet , dass** die Neutralrastierung einen Rastierbolzen (5) umfasst, der in eine Kerbe (6) in der Schaltschiene (4) eingreift, wobei eine von dem Rastierbolzen (5) erzeugte Rastenkraft während der Synchronphase über eine Schräge (7) bzw. (8) der Schaltkraft entgegenwirkt.

7. Schaltvorrichtung für ein Getriebe eines Kraftfahrzeugs nach Anspruch 6, **dadurch gekennzeichnet , dass** die durch die Rastenkraft über die Schräge (7) bzw. (8) ausgeübte Gegenkraft durch eine unterschiedliche Ausführung der Schrägen (7, 8) gangabhängig einstellbar ist.

8. Schaltvorrichtung für ein Getriebe eines Kraftfahrzeugs nach einem der vorangehenden Ansprüche, **dadurch gekennzeichnet , dass** zur spielfreien Rastierung der Schaltanlage und somit des Handschalthebels im Fahrerhaus bei einem Getriebe mit einer Servounterstützungseinrichtung die Schaltanlage über die Rastierung der Servounterstützungseinrichtung rastierbar ist, wobei bei einem Getriebe ohne Servounterstützungseinrichtung die Rastierung über eine im Schaltausleger vorgesehene Raste erfolgt.

9. Schaltvorrichtung für ein Getriebe eines Kraftfahrzeugs nach einem der vorangehenden Ansprüche, **dadurch gekennzeichnet , dass** bei der Schaltschiene einer Schaltgasse, die niedrige Schaltkräfte erfordert, die Geometrie des Schaltfingers derart gestaltet ist, dass das Spiel zwischen Schaltfinger (1) und Mitnehmermaul (3) der Schaltschiene (4) in Neutralstellung so gering wie möglich ist.
